# DEMANDE DE BREVET EUROPEEN

(11) **EP 3 238 965 A1**
(43) Date de publication de la demande: **01.11.2017**
(21) Numéro de dépôt: 17380002.0
(22) Date de dépôt: 23.01.2017
(51) Int. Cl.: B60H 1/00, F25B 21/02, F24F 5/00

(54) **DISPOSITIF DE CONTRÔLE CLIMATIQUE POUR LES VÉHICULES ET LES BÂTIMENTS UTILISANT DES ELEMENTS PELTIER**

(30) Priorité: 20.02.2016 ES 201600098
(71) Demandeur: Telechi, Ioan Danut, 43530 Alcanar (Tarragona) (ES)
(72) Inventeur: Telechi, Ioan Danut, 43530 Alcanar (Tarragona) (ES)

(57) **Abrégé**

L'appareil est fabriqué pour la climatisation de tous types d'habitacles, des véhicules, des maisons, des locaux, etc. sans utiliser de gaz réfrigérant.
Le principe du fonctionnement est de refroidir ou de chauffer un liquide avec un ou plusieurs cellules Peltier (2).

L'appareil comprenant un circuit réfrigérant avec un évaporateur (8) destiné à refoiridir un habitacle, un pompe (7), plusieurs radiateurs (1) en série traversés par le fluide réfrigérant et permettant de refroidir le réfrigérant avant de retourner ver l'évaporateur (8).
Les radiateurs (1) étant positionnés sur la face froide externe des cellules de Peltier (2) tandis que d'autres radiateurs dissipateurs (10) sont situés sur les faces chaudes des cellules de Peltier afin de dissiper la chaleur grâce à de l'air (3).

## Description

Cette invention correspond à un appareil de climatisation qui comprend un système qui refroidit et chauffe un liquide qui peut être un réfrigérant ou un autre type de liquide, selon le besoin.

L'objet de la présente invention est de parvenir à ce qu'un équipement complétement compact puisse maintenir une température préalablement établie, au sein d'un habitacle, sans avoir ni à utiliser un quelconque type de gaz réfrigérant ni un compresseur.

Durant les mois de chaleur, les températures dépassent souvent les 30°C et peuvent même dépasser les 45°C. Afin de rabaisser significativement la chaleur, des appareils conventionnels d'air conditionné sont utilisés pour abaisser la température, que ce soit dans le cas des véhicules, des foyers, des locaux industriels, commerciaux et de loisir, en définitive, dans tous les endroits ayant besoin d'une climatisation.

L'efficacité de tout système conventionnel actuel représente toujours un problème pour des raisons économiques ou d'énergie ainsi que d'environnement.

Ces climatisations conventionnelles, qu'elles se trouvent tant dans des bâtiments urbains ou industriels que dans des véhicules, supposent des frais supplémentaires tant économiques que d'énergie.
Ceci s'élève à entre 5% et 20%, car il est nécessaire de comprimer le gaz réfrigérant au moyen d'un compresseur. Le compresseur s'adapte à la rotation du moteur, au moyen d'une courroie et, lorsqu'il doit se mettre en marche il le fait grâce à la puissance du moteur du véhicule et c'est alors que se produit une diminution de la puissance du véhicule, établie par le propre mécanisme de fonctionnement et que se produit également une consommation plus importante de combustible ce qui à son tour produit une pollution atmosphérique supérieure à la normale.

De même, ceci représente un coût élevé en matière de maintenance et de recharge du gaz réfrigérant qui de plus est polluant.

Avec ce modèle, il est possible d'éliminer des véhicules, le radiateur de réfrigération, l'électro-ventilateur, le vase d'expansion, le compresseur, la pompe du liquide réfrigérant et sa pré-installation et dans l'ensemble, le poids de tout l'équipement conventionnel.

En la matière, pour les zones urbaines, il existe un besoin de systèmes d'énergie plus efficaces avec une intégration et installation plus facile.
Ce système utilitaire présente une plus grande efficacité d'intégration du système du fait qu'il fait abstraction des composantes qui jusqu'à présent étaient nécessaires pour le fonctionnement des appareils conventionnels.

Le présent modèle, conçu pour les bâtiments, élimine par rapport aux actuels et conventionnels, le compresseur (équipement extérieur) ainsi que toute sa pré-installation ceci permettant une économie. Le fait d'éliminer les gaz polluants qui sont utilisés pour la réfrigération et dans son intérieur en font un modèle écologique.

De façon globale, le modèle représenterait, dans ce sens, une amélioration par l'élimination de composantes qui représentent une dépense pour l'utilisateur, tant pour des véhicules que pour des bâtiments urbains ainsi qu'une diminution quantitative du volume des équipements et par conséquent une installation simple à effectuer.

Par conséquent, l'objet de ce modèle utilitaire est de fournir un dispositif d'air conditionné électrique plus efficace et plus économique ainsi qu'écologique, dont le fonctionnement ne nécessite ni gaz réfrigérant, ni compresseur, ni combustible et dont l'utilisation principale serait sur des véhicules et dans des installations résidentielles ou commerciales.

### Description de l'invention

Le présent modèle correspond à un dispositif électrique d'air conditionné muni de semi-conducteurs connus comme cellules Peltier, ou similaires, qui ont la propriété de produire un transfert de température lorsqu'intervient une tension sur les cellules Peltier, c'est à dire lorsque se produit le refroidissement liquide-air.
Il s'agit d'un système à basse consommation qui n'utilise ni gaz, ni compresseur, ni combustible pour son fonctionnement et qui sert à réfrigérer des véhicules et des bâtiments.

Un système de réfrigération pour réfrigérer l'habitacle d'un véhicule. Le présent modèle utilitaire fournit également la climatisation pour une zone résidentielle, récréative, industrielle et en définitive pour toute construction en ayant besoin.

Ce dispositif, principalement composé de cellules Peltier, est installé à l'entrée du conduit de l'évaporateur du circuit conventionnel existant sur les véhicules ou bien dans les systèmes split conventionnels déjà utilisés dans les bâtiments ou foyers, en nombre suffisant, selon la puissance de réfrigération désirée.

Ce système de réfrigération comprend une unité électrique installée dans la zone du moteur du véhicule et capable de refroidir le liquide réfrigérant qui y circule, au moyen d'un circuit fermé.

Cette unité de réfrigération refroidit ou chauffe le liquide réfrigérant circulant vers l'évaporateur ou les systèmes split installés dans les bâtiments et qui transmet de l'air froid ou chaud dans l'habitacle correspondant.

### Disposition de réalisation préférée

Dispositif électrique d'air conditionné pour un véhicule, connecté à la batterie qui peut être de 12v ou 24v, au moyen d'un fusible.

Pour réfrigérer les radiateurs en aluminium (10) chauffés par l'effet de la cellule Peltier (2) il sera possible d'utiliser des ventilateurs ou bien, comme le moteur du véhicule absorbe l'air extérieur pour son fonctionnement et du fait du niveau élevé d'air absorbé (3) il possible de l'utiliser, pour refroidir, les radiateurs (10).

Dans la partie froide du dispositif il existe deux radiateurs en aluminium (1) et, selon le besoin il pourrait y en avoir plus, par où passe le liquide qui peut être réfrigéré ou un autre liquide qui se refroidirait au contact des cellules Peltier.

Ce liquide, au travers d'une pompe, (7) forme un circuit fermé, au travers des tuyaux (4), (5) et (6), qui unit les radiateurs (1), le dispositif et l'évaporateur existant sur le véhicule (8) et, dans le cas de bâtiments, au travers des splits.
Sur l'autre partie du dispositif, il est nécessaire de dissiper la chaleur émise par la cellule Peltier (2) au moyen de ventilateurs.

Pour un meilleur fonctionnement, il est possible d'utiliser un thermostat ou un capteur de température pour ajuster ou empêcher la surchauffe.

Ce liquide, qui peut être réfrigérant ou autre, est celui qui passe par l'évaporateur (8) qui refroidit l'air à l'aide du ventilateur intérieur (9) atteignant l'habitacle par le conduit conventionnel.

Le dispositif forme une boite compacte avec des ouvertures pour le passage de l'air et du liquide et comporte en son intérieur tous les éléments de fonctionnement. Le format et la puissance peuvent varier en fonction de l'habitacle à refroidir.

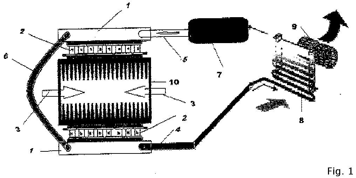

## Revendications

1. Dispositif de climatisation pour véhicules et bâtiments prévu pour son utilisation dans une enceinte fermée et isolée qui effectue un transfert de froid afin de maintenir une température préfixée à l'intérieur d'un habitacle, constituant un dispositif à partir de modules spéciaux comme le sont les cellules Peltier ; ce dispositif se **caractérise par le fait que** les cellules Peltier sont connectées entre elles en série et disposées sur le même plan avec un radiateur dissipateur de chaleur et radiateur par lequel circule un liquide pouvant être réfrigérant ou autre.

2. Dispositif de climatisation pour véhicules et bâtiments, selon la prétention **caractérisé par le fait que** les radiateurs dissipateurs qui sont adossés à la face interne des cellules Peltier, sont complétés par un radiateur dissipateur qui participe au refroidissement au moyen d'un liquide, pouvant être réfrigérant ou autre, et d'air.

3. Dispositif de climatisation pour véhicules et bâtiments, selon la prétention **caractérisé par le fait que** les radiateurs ou dissipateurs sont composés par des pales ou des lames en aluminium.

4. Dispositif de climatisation pour véhicules et bâtiments, selon les prétentions précédentes, **caractérisé par le fait que** le tout forme un équipement compact.

5. Dispositif de climatisation pour véhicules et bâtiments, selon les prétentions précédentes, **caractérisé par le fait qu'**il comprend un thermostat et un mécanisme d'interrupteurs permettant de connaître la température existante dans l'habitacle et en effectuer le réglage.

6. Dispositif de climatisation pour véhicules et bâtiments, selon les prétentions précédentes, **caractérisé par le fait qu'**il comprend des moyens permettant de détecter les pannes.
